# EUROPÄISCHE PATENTANMELDUNG

(11) **EP 1 120 774 A2**
(43) Veröffentlichungstag der Anmeldung: **01.08.2001**
(21) Anmeldenummer: 01100111.2
(22) Anmeldetag: 12.01.2001
(51) Int. Cl.: G10K 11/172, F16L 55/033

(54) **Akustischer Absorber und Verfahren zur Schallabsorption**

(30) Priorität: 24.01.2000 DE 10002984
(71) Anmelder: EADS Deutschland GmbH, 81663 München (DE)
(72) Erfinder: Faulhaber, Peter, 81539 München (DE); Pongratz, Reinhard, 82024 Taufkirchen (DE)

(57) **Zusammenfassung**

Ein akustischer Absorber (10) umfasst ein Gehäuse bzw. eine Wandung (11), die einen Innenraum mit einem Absorbervolumen (12) umgibt. In der Wandung (11) sind ein oder mehrere Öffnungen (13) vorgesehen, um das Absorber-Volumen (12) an einen Kanal (20) anzukoppeln und so den Schall im Kanal (20) zu reduzieren. Dabei ist die Eigenfrequenz und die Impedanz des Absorbers (12) variabel, so dass der Absorber (12) an ein Schallfeld in dem Kanal (20) entsprechend den jeweiligen Betriebsbedingungen angepasst werden kann. Die Anpassung erfolgt dabei mechanisch, beispielsweise durch eine elastische Membran (15) zur Veränderung des Absorber-Volumens (12), oder thermisch, beispielsweise durch einen Heizdraht (14) oder ein Drahtgeflecht (17). Bei dem Verfahren zur Schallabsorption wird die Eigenfrequenz und die Impedanz des Absorbers (12) thermisch und/oder mechanisch verändert, um den Absorber (10) an das Schallfeld in dem Kanal (20) anzupassen.

## Beschreibung

Die vorliegende Erfindung betrifft einen akustischen Absorber gemäß dem Oberbegriff von Patentanspruch 1 und ein Verfahren zur Schallabsorption gemäß dem Oberbegriff von Patentanspruch 11.

Akustische Absorber werden in der Technik eingesetzt, um Schallpegel zu mindern bzw. Schall zu absorbieren. Beispielsweise werden akustische Absorber in Flugzeugtriebwerken, Auspuff- bzw. Abgasanlagen, Klimaanlagen oder allgemein bei Strömungskanälen verwendet, um den Schallpegel zu reduzieren.

Bekannte akustische Absorberelemente, wie z.B. Liner in Flugtriebwerken oder Resonatoren, setzen sich aus passiven Bauteilen zusammen und können deshalb nicht während des Betriebes an variierende Schallfeldbedingungen angepasst werden. Somit können die bekannten akustischen Absorberelemente nicht auf veränderte Schall- und Strömungsfeldbedingungen, wie beispielsweise Schalldruck, modale Zusammensetzung, Strömungsgeschwindigkeit, Turbulenzen, usw, während des Betriebs angepasst werden. Daher ist es nicht möglich, bei unterschiedlichen Betriebszuständen optimale Schallpegelminderungen mit herkömmlichen Absorbern zu erzielen.

Eine Adaption mittels elektrodynamischen, piezoelektrischen Aktuatoren hätte den Nachteil eines hohen Regelungsaufwands. Darüber hinaus sind derartige Aktuatoren aufgrund ihrer geringen Robustheit nur sehr begrenzt in akustische Absorber einsetzbar.

Die Druckschrift WO 92/15088 zeigt eine akustische Dämpfungseinrichtung, bei der ein Resonator auf die Frequenz der akustischen Schwingungen eingestellt werden kann. Dazu ist eine bewegbare Wand in dem Resonator angeordnet, die über eine Antriebsstange und einen Motor angetrieben wird um das Volumen im Resonator zu verändern.

Zur Veränderung der Resonanzfrequenz wird in der Druckschrift DE 42 28 356 C2 vorgeschlagen, einen längen- und querschnittsveränderlichen Resonatorhals vorzusehen, beispielsweise in Form eines flexiblen Schlauchs, der über eine Stelleinrichtung bzw, einen Zugmechanismus gestreckt wird.

Bei den bekannten Einrichtungen und Verfahren ergibt sich jedoch das Problem eines hohen konstruktiven Aufwands um das Resonatorvolumen anpassen zu können. Weiterhin mangelt es derartigen Systemen oftmals an der notwendigen Robustheit gegenüber mechanischen Beanspruchungen.

Es ist daher die Aufgabe der vorliegenden Erfindung, einen akustischen Resonator zu schaffen, der an unterschiedliche akustische Bedingungen anpassbar ist, einen relativ geringen konstruktiven Aufwand erfordert und robust ausgestaltet werden kann. Weiterhin soll ein Verfahren zur Schallabsorption angegeben werden, mit dem auf einfache Weise bei unterschiedlichen Betriebszuständen eine optimale Schallpegelminderung erfolgen kann.

Diese Aufgabe wird gelöst durch den akustischen Absorber gemäß Patentanspruch 1 und das Verfahren zur Schallabsorption gemäß Patentanspruch 9. Weitere vorteilhafte Merkmale, Aspekte und Details der Erfindung ergeben sich aus den abhängigen Ansprüchen, der Beschreibung und der Zeichnung.

Vorteile und Merkmale, die im Zusammenhang mit dem akustischen Absorber beschrieben werden, gelten auch für das Verfahren zur Schallabsorption, und umgekehrt.

Der erfindungsgemäße akustische Absorber umfasst eine Wandung, die einen Innenraum mit einem Absorber-Volumen umgibt und ein oder mehrere Öffnungen aufweist zur Ankopplung des Absorber-Volumens an einen Kanal, wobei die Eigenfrequenz und die Impedanz des Absorbers variabel ist, um den Absorber an ein Schallfeld in dem Kanal anzupassen.

Durch die variable Eigenfrequenz und Impedanz des Absorbers kann der Absorber optimal an das umgebende Schallfeld angepasst werden, selbst während des Betriebs bei unterschiedlichen Betriebszuständen. Somit wird eine optimale Schallpegelminderung erreicht. Dabei ist nur ein geringer Regelungsaufwand erforderlich.

Vorteilhafterweise ist die Eigenfrequenz des Absorbers und die Impedanz des Absorbers mechanisch und/oder thermisch einstellbar. Dadurch kann auf besonders einfache Weise eine optimale Anpassung an das umgebende Schallfeld erzielt werden. Weiterhin ist der akustische Absorber auch kostengünstig realisierbar. Die Absorber-lmpedanz kann hinsichtlich Reaktanz und Resistanz angepasst werden.

Bevorzugt umfasst der akustische Absorber eine elastische Membran zur Veränderung des Absorber-Volumens. Dabei ist die Membran beispielsweise pneumatisch und/oder hydraulisch beaufschlagbar. Dadurch kann die optimale Anpassung des Absorbers während des Betriebs durch einfache konstruktive Maßnahmen realisiert werden, wobei zusätzlich ein hoher Grad an Robustheit erzielbar ist.

Vorteilhafterweise hat der akustische Absorber ein Heizelement zum Aufheizen des Absorber-Volumens. Dabei kann das Heizelement beispielsweise ein Heizdraht bzw, ein spiralförmiger Heizdraht sein. Diese Realisierung ist besonders robust und kostengünstig.

Bevorzugt umfasst der akustische Absorber eine Einrichtung zur Veränderung des Strömungswiderstands im Bereich der Öffnungen. Dadurch kann ein noch besserer Anpassungsgrad und somit eine noch zusätzlich verbesserte Schallpegelminderung erreicht werden.

Der akustische Absorber kann als derartige Einrichtung beispielsweise ein beheizbares Drahtgitter oder Drahtgeflecht bzw. -gewebe umfassen, das vorteilhafterweise im Bereich der Öffnungen angeordnet ist. Somit kann über eine Heizung der Drähte der Strömungswiderstand im Bereich der Öffnungen verändert werden, d.h. es erfolgt eine Widerstandsadaption des Absorbers. Beim Aufheizen der Drähte bzw. des Drahtgitters erfolgt z.B. eine Volumenänderung, die einen geänderten Strömungswiderstand zur Folge hat. Auch durch diese Maßnahme lässt sich eine noch bessere Anpassung des Absorbers an das Schallfeld realisieren.

Vorteilhafterweise umfasst der akustische Absorber eine Sensoreinheit zur Temperaturmessung. Die Sensoreinheit bzw. Sensorik kann z.B. an dem heizbaren Drahtgeflecht bzw. -gitter angeordnet sein, oder auch am Heizdraht, wie er oben angesprochen wurde. Dadurch lässt sich mit einfachen Mitteln eine Steuerung oder auch eine Regelung der Arbeitsfrequenz bzw, des akustischen Widerstands erzielen.

Vorzugsweise ist der akustische Absorber mit einer Steuerungs- oder Regelungseinheit zur Einstellung der Temperatur und/oder des Absorber-Volumens versehen.

In einer weiteren Ausführungsform ist im Volumen des Absorbers zusätzlich ein Mikrofon vorgesehen, um den Arbeitsfrequenzbereich des Absorbers zu detektieren und dieses als Stellgröße für eine Regelung zu verwenden.

Bei dem erfindungsgemäßen Verfahren zur Schallabsorption wird ein Absorber-Volumen an einen Kanal angekoppelt, um ein Schallfeld in den Kanal zu absorbieren, wobei die Eigenfrequenz und die Impedanz des Absorbers verändert wird, um den Absorber an das Schallfeld in dem Kanal anzupassen. Dadurch kann auch bei unterschiedlichen Betriebszuständen oder Schalleigenschaften im Kanal eine verbesserte bzw. optimale Schallpegelminderung erzielt werden. Der Arbeitsfrequenzbereich und/oder die akustische Impedanz des Absorbers können während des Betriebs auf sich verändernde akustische und strömungsakustische Eigenschaften des zu bedämpfenden Schallfeldes angepasst werden.

Vorteilhafterweise wird das Absorber-Volumen mittels einer Membran in seiner Größe verändert. Zusätzlich oder auch alternativ dazu ist es möglich, die Temperatur des Absorber-Volumens durch ein regelbares Heizelement einzustellen.

Vorteilhafterweise wird der Strömungswiderstand zwischen dem Kanal und dem Absorber-Volumen beispielsweise durch ein heizbares Drahtgitter oder gleichwirkende Mittel eingestellt.

Zusätzlich zu den oben beschriebenen Vorteilen wird mit der vorliegenden Erfindung eine einfache und kostengünstige Fertigung des Absorbers ermöglicht. Der akustische Absorber hat ein geringes Gewicht und er arbeitet zuverlässig auch bei widrigen Umgebungsbedingungen, wie beispielsweise sehr hohe oder niedrige Temperaturen, hohe oder niedrige turbulente Strömungsgeschwindigkeiten, stark schwankende Schalldrücke, und ähnliches. Der Regelungsaufwand ist gering und der akustische Absorber kann vorteilhaft in den verschiedensten technischen Bereichen eingesetzt werden, wie beispielsweise in Flugtriebwerken, im Kfz-Bereich, bei Abgasanlagen, Klimaanlagen, usw..

Nachfolgend wird eine bevorzugte Ausführungsform der Erfindung beispielhaft beschrieben. Dabei zeigt:

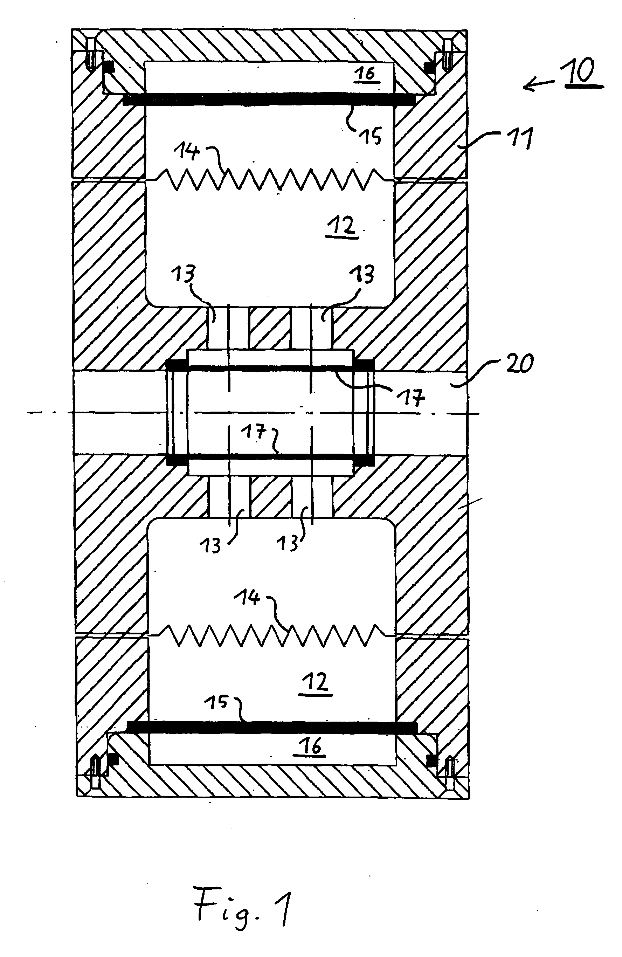

- Fig. 1: einen akustischen Absorber als bevorzugte Ausführungsform der Erfindung, der an einen Kanal angekoppelt ist um das Schallfeld im Kanal zu bedämpfen.

Figur 1 zeigt einen akustischen Absorber 10, der an einen Kanal 20 gekoppelt ist. Der akustische Absorber 10 hat eine Wandung 11, die einen Innenraum 12 umgibt. Der von der Wandung 11 umschlossene Innenraum 12 bildet ein Absorber-Volumen. In der Wandung 11 sind weiterhin durchgehende Löcher als Öffnungen 13 angeordnet, um das Absorber-Volumen 12 an den Kanal 20 anzukoppeln. Der akustische Absorber 10 ist mit thermischen und mechanischen Elementen versehen, durch die die Eigenfrequenz und die Impedanz des Absorber-Volumens eingestellt werden kann, so dass der Absorber bzw. das Absorber-Volumen 12 an ein Schallfeld in dem Kanal 20 angepasst werden kann. Diese Elemente werden nachfolgend näher beschrieben.

In der hier gezeigten, bevorzugten Ausführungsform ist der akustische Absorber 10 und der Kanal 20, an den er gekoppelt ist, als Absorberring ausgestaltet. Aus der Schnittdarstellung gemäß Figur 1 ist zu erkennen, dass der Absorberring den Schallkanal bzw. Kanal 20 umgibt. Der akustische Absorber 10 ist also in dieser Ausführungsform kreissymmetrisch, wobei die Schnittebene von Figur 1 die Symmetrieebene darstellt. D.h., der akustische Absorber 10 hat die Form eines Torus, wobei die Öffnungen 13 durch Bohrungen realisiert sind, die sich radial vom Kanal 20 ausgehend durch den daran angrenzenden Bereich der Wandung 11 des akustischen Absorbers 10 erstrecken und so den Innenraum des Kanals 20 mit dem Innenraum bzw. dem Absorber-Volumen 12 verbinden.

Es ist jedoch genauso möglich, den akustischen Absorber 10 in einer anderen Form auszugestalten, die es ermöglicht, ihn in irgendeiner Weise an einen Kanal bzw. Strömungskanal anzukoppeln. Dabei genügt auch die Ankopplung an einer oder an mehreren Seiten, ohne dass der Kanal 20 vom akustischen Absorber 10 umgeben werden muss.

In dem Absorber-Volumen 12 ist ein Heizelement in Form eines Heizdrahtes 14 angeordnet, mit dem das Absorber-Volumen aufgeheizt werden kann bzw. die Temperatur eingestellt werden kann. Der Heizdraht 14 ist mäanderförmig bzw. spiralförmig ausgestaltet und an eine hier nicht dargestellte Strom- bzw. Spannungsquelle angeschlossen. Der Heizdraht 14 erstreckt sich durch die Wandung 11, die das Gehäuse des akustischen Absorbers 10 bildet. Bei einer Aufheizung des Gases im Absorber-Volumen 12 ändert sich die Dichte des dort befindlichen Fluids bzw. Gases, was in einer veränderten Schallgeschwindigkeit resultiert. Dadurch ergibt sich eine veränderte Arbeitsfrequenz bzw. ein veränderter Arbeitsfrequenzbereich des akustischen Absorbers 10. Weiterhin ergibt sich bei einer Aufheizung des Heizdrahts 14 und damit des Gases im Absorber-Volumen 12 auch ein veränderter akustischer Widerstand. Somit kann durch den Heizdraht 14 eine Anpassung des Arbeitsfrequenzbereichs und der akustischen Impedanz bzw. des akustischen Widerstands des Absorbers 10 erfolgen.

In der hier dargestellten bevorzugten Ausführungsform umfasst der akustische Absorber 10 weiterhin eine elastische Membran 15 als variablen Abschluss des Absorber-Volumens 12. D.h., die elastische Membran 15 trennt das Absorber-Volumen 12 von einem variablen Bedrückungs-Volumen 16. Das Bedrückungs-Volumen 16 ist durch Kanäle, die in der Figur nicht dargestellt sind, mit einer Pumpe oder Druckerzeugungseinrichtung, die ebenfalls nicht dargestellt ist, verbunden. Durch diese Mittel, kann das Bedrückungs-Volumen 16 in seiner Größe verändert werden, was zu einer Verbiegung der elastischen Membran 15 führt. Bei einer Gas- oder Luftzufuhr in das Bedrückungs-Volumen 16 bzw, bei einem Druck im Bedrückungs-Volumen 16, der größer ist als der Druck im Absorber-Volumen 12, verbiegt sich die elastische Membran 15 zum Absorber-Volumen 12 hin. In diesem Fall wird das Absorber-Volumen 12 in seiner Größe reduziert. Bei umgekehrten Druckverhältnissen hingegen kann das Absorber-Volumen 12 mittels der elastischen Membran 15 auch vergrößert werden.

Die elastische Membran 15 bildet also ein Mittel zur mechanischen oder pneumatischen Veränderung des Absorber-Volumens 12. Dadurch erfolgt eine Frequenzverschiebung, d.h. es erfolgt eine Anpassung der Arbeitsfrequenz bzw. des Arbeitsfrequenzbereiches des akustischen Absorbers 10 bei entsprechender Einstellung. Weiterhin ergibt sich eine zumindest teilweise Änderung des akustischen Widerstands bzw. der akustischen Impedanz des Absorbers 10.

Der Heizdraht 14 und die elastische Membran 15 können einzeln, d.h. unabhängig voneinander, oder auch in Kombination miteinander in dem akustischen Absorber 10 vorgesehen sein. D.h., es können thermische Mittel oder mechanische Mittel zur Veränderung der Eigenfrequenz und der Impedanz des Absorbervolumens vorgesehen sein, oder eine Kombination von beidem.

Der hier dargestellte akustische Absorber 10 umfasst weiterhin ein Drahtgitter bzw. Drahtgeflecht 17, das im Bereich der Öffnungen 13 angeordnet ist. Das Drahtgeflecht 17 ist beheizbar und befindet sich im vorderen Bereich der Öffnungen 13, d.h. an der Grenze zwischen dem Kanal 20 und der oder den Öffnungen 13.

Somit kann das Drahtgewebe bzw. Drahtgeflecht 17 in unmittelbarer Nähe der Öffnungen 13 erwärmt werden. Dadurch wird der komplexe Strömungswiderstand des Drahtgewebes bzw. Drahtgeflechts 17 vor den Öffnungen verändert. Es ergibt sich eine Variation der Temperatur des Fluids bzw. Gases in den Öffnungen 13 und damit verbunden eine Veränderung der Schallgeschwindigkeit, der Dichte und der Viskosität des Gases. Somit bildet das Drahtgeflecht 17 ebenfalls thermisch arbeitende Mittel, die die Arbeitsfrequenz und den akustischen Widerstand des akustischen Absorbers 10 verändern können.

Bei einer Aufheizung der Drähte des Drahtgeflechts 17 ändert sich auch das Volumen der einzelnen Drähte, was zu einem veränderten Strömungswiderstand führt. Dadurch ändert sich die Widerstandsadaption des akustischen Absorbers 10 und es erfolgt ebenso eine optimale Anpassung an die jeweiligen Betriebsbedingungen bzw. an ein verändertes Schallfeld im Kanal 20.

Die bevorzugte Ausführungsform des akustischen Absorbers 10 hat weiterhin Sensoren zur Temperaturmessung, die in der Figur nicht dargestellt sind und beispielsweise am Heizdraht 14 oder auch am Drahtgeflecht 17 angeordnet sind. Dadurch kann eine Regelung der Heizleistung über eine entsprechende Regelelektronik bzw. Regeleinrichtung erfolgen. Es ist aber auch möglich, die Heizleistung durch voreingestellte Werte zu steuern.

Zur Steuerung oder Regelung werden in Versuchen Kennlinien bzw. Kennlinienfelder ermittelt, die das Verhältnis zwischen Heizstrom und Temperatur darstellen. Die entsprechenden Daten werden in einem Speicher abgelegt und dienen zur Steuerung bzw. Regelung der Heizleistung im akustischen Absorber 10, um eine optimale Anpassung an die Schallfeldparameter im jeweiligen Anwendungsfall bzw. Betriebszustand zu erreichen.

Bei den Verfahren zur Schallabsorption mit dem hier gezeigten akustischen Absorber 10 erfolgt die Frequenz- und Impedanzadaption mechanisch und/oder thermisch: Das Volumen des Absorbers 10 wird durch die pneumatisch beaufschlagte elastische Membran 15 dadurch verändert, dass diese in das Volumen gedrückt wird. Die akustische Kennimpedanz des Fluides im Absorber-Volumen 12 wird verändert, in dem das Fluid z.B. über den Heizdraht 14, der ein elektrisches Heizwendel ist erwärmt wird. Die akustische Kennimpedanz des Fluides in und um die Öffnungen 13 wird verändert, in dem das Fluid durch das heizbare Drahtgewebe bzw. Drahtgeflecht 17 in unmittelbarer Nähe der Öffnungen 13 erwärmt wird. Der komplexe Strömungswiderstand des Drahtgeflechts 17 vor den Öffnungen 13 wird verändert, in dem dieses gezielt erwärmt wird.

Die verschiedenen Einstellmöglichkeiten zur Anpassung des Absorbers 10 an variierende Schallfeldbedingungen können unabhängig voneinander durchgeführt werden. D.h., sie können einzeln oder in Kombination miteinander erfolgen.

### Bezugszeichen

- 10: Akustischer Absorber
- 11: Wandung
- 12: Absorber-Volumen
- 13: Öffnungen
- 14: Heizdraht
- 15: Elastische Membran
- 16: Bedrückungs-Volumen
- 17: Drahtgeflecht bzw. -gitter
- 20: Kanal

## Patentansprüche

1. Akustischer Absorber, mit einer Wandung (11), die einen Innenraum mit einem Absorber-Volumen (12) umgibt und ein oder mehrere Öffnungen (13) aufweist, zur Ankopplung des Absorber-Volumens (12) an einen Kanal (20), wobei die Eigenfrequenz und die Impedanz des Absorbers (12) variabel ist, um den Absorber (10) an ein Schallfeld in dem Kanal (20) anzupassen, gekennzeichnet durch eine elastische Membran (15) zur Veränderung des Absorber-Volumens (12) und/oder ein Heizelement (14) zum Aufheizen des Absorber-Volumens (12).

2. Akustischer Absorber nach Anspruch 1, dadurch gekennzeichnet, dass die Eigenfrequenz des Absorbers (12) und die Impedanz des Absorbers (12) mechanisch und/oder thermisch einstellbar ist .

3. Akustischer Absorber nach Anspruch 1 oder 2, dadurch gekennzeichnet, dass die Membran (15) pneumatisch und/oder durch Druck beaufschlagbar ist.

4. Akustischer Absorber nach einem der vorhergehenden Ansprüche, dadurch gekennzeichnet, dass das Heizelement (14) ein spiralförmiger Heizdraht ist.

5. Akustischer Absorber nach einem der vorhergehenden Ansprüche, gekennzeichnet durch eine Einrichtung zur Veränderung des Strömungswiderstands im Bereich der Öffnungen (13).

6. Akustischer Absorber nach einem der vorhergehenden Ansprüche, gekennzeichnet durch ein beheizbares Drahtgitter oder -geflecht (17), das im Bereich der Öffnungen (13) angeordnet ist.

7. Akustischer Absorber nach einem der vorhergehenden Ansprüche, gekennzeichnet durch eine Sensoreinheit zur Temperaturmessung.

8. Akustischer Absorber nach einem der vorhergehenden Ansprüche, gekennzeichnet durch eine Steuerungs- oder Regelungseinheit zur Einstellung der Temperatur und/oder des Volumens des Absorber-Volumens (12).

9. Verfahren zur Schallabsorption, bei dem ein Absorber-Volumen (12) an einen Kanal (20) angekoppelt wird, um ein Schallfeld in dem Kanal (20) zu absorbieren, wobei die Eigenfrequenz und die Impedanz des Absorbers (12) verändert wird, um den Absorber (12) an das Schallfeld in dem Kanal (20) anzupassen, dadurch gekennzeichnet, dass das Absorber-Volumen (12) mittels einer Membran (15) in i seiner Größe verändert wird und/oder durch ein regelbares Heizelement (14) die Temperatur des Absorber-Volumens (12) eingestellt wird.

10. Verfahren nach Anspruch 9, dadurch gekennzeichnet, dass durch ein heizbares Drahtgitter oder -geflecht (17) der Strömungswiderstand zwischen dem Kanal (20) und dem Absorber-Volumen (12) eingestellt wird.
